# EUROPEAN PATENT SPECIFICATION

(11) **EP 1 881 189 B1**
(45) Date of publication and mention of the grant of the patent: **29.10.2014**
(21) Application number: 06015263.4
(22) Date of filing: 21.07.2006
(51) Int. Cl.: F02M 51/06, F02M 61/16, F16J 1/02

(54) **Piston-cylinder system and hydraulic compensation device**
Kolben-Zylinder-Aggregat und hydraulisches kompensationsvorrichtung
Système piston-cylindre et dispositif de compensation hydraulique

(43) Date of publication of application: 23.01.2008
(73) Proprietor: Continental Automotive GmbH, 30165 Hannover (DE)
(72) Inventor: Bondi, Antonio, Dr., 53010 Rosia (Siena) (IT); Falaschi, Filippo, 56043 Fauglia (IT); Matteucci, Luca, 56124 Pisa (IT)

(56) References cited:
- EP-A2- 1 234 975
- WO-A-02/25096
- WO-A1-00/77351
- US-A- 4 858 439
- US-A1- 2003 042 325

## Description

The invention relates to a hydraulically closed piston-cylinder system and to a hydraulic compensation device which comprise the hydraulically closed piston-cylinder system. The piston-cylinder system comprises a cylinder and a piston. The piston is arranged in the cylinder movable in axial direction.

DE 103 44 061 A1 discloses an injector with a hydraulic compensation device. The compensation device comprises a hydraulically sealed system which comprises a piston. The piston separates the hydraulically sealed system in a first volume and a second volume. The slowly increasing pressure difference between the first volume and the second volume can be compensated by a fluid flow from the first volume to the second volume or vice-versa.

WO 02/25096 A1 discloses a closed hydraulic system, especially a hydraulic play compensation system. The system comprises at least one cylinder and a piston having guide surfaces and an adjustment gap placed there between. In order to rapidly and thoroughly carry out degasification of the adjustment gap required for working efficiency, the guide surfaces of the piston especially has fine spiral grooves.

The object of the invention is to create a hydraulic compensation device and a piston-cylinder system for the hydraulic compensation.device which enables a proper function of the piston-cylinder system and the hydraulic compensation device over a long lifetime of the piston-cylinder system and, respectively, the hydraulic compensation device.

The object of the invention is achieved by the independent claims 1 and 7. Advantageous embodiments of the invention are given in the sub-claims.

The invention is distinguished concerning a first aspect of the invention by a hydraulically closed piston-cylinder system. The hydraulically closed piston-cylinder system comprises a cylinder and a piston. The piston is arranged in the cylinder movable in axial direction. Further, the piston-cylinder system comprises a free particle agglomeration area. The free particle agglomeration area is formed by a circular groove of the piston. The circular groove of the piston extends around a piston head of the piston. Additionally or alternatively, the free particle agglomeration area is formed by a circular groove of the cylinder. The circular groove of the cylinder extends around the piston head. The free particle agglomeration area is bordered by the cylinder and walls of the circular groove of the piston and/or by the piston and the walls of the circular groove of the cylinder.

If a fluid, for example oil, is in the cylinder and if the piston moves in axial direction relative to the cylinder, there is a lower fluid flow and/or a different streaming of the fluid in the free particle agglomeration area than outside of the free particle agglomeration area between the a shell of the piston head and an inner wall of the cylinder. The lower fluid flow causes that particles in the fluid are trapped in the free particle agglomeration area.

In an advantageous embodiment of the first aspect of the invention, the piston has a piston ring groove for taking in a piston ring. The piston ring enables to seal up a first.area on one side of the piston ring against a second area on the other side of the piston ring.

In a further advantageous embodiment of the first aspect of the invention, the free particle agglomeration area is arranged next to an axial end of the piston head. At the axial ends of the piston head, the friction between the piston head and the cylinder is bigger than in the middle of the piston head. So, next to the axial end of the piston head the wall of the cylinder and the shell of the piston head abrade more than in the middle of the piston head. Therefore, next to the axial ends of the piston head more particles are produced by the abrasion than in the middle of the piston head. So, arranging the grooves next to the axial ends of the piston head contributes to a very good trapping of the particles.

In a further advantageous embodiment of the first aspect of the invention, edges of the groove of the cylinder and/or or edges of the groove of the piston comprise a spherical shape. The spherical shape of the edges of the grooves contributes to a low friction between the piston head and the wall of the cylinder. This contributes to a low production of particles in the hydraulically closed piston-cylinder system.

The piston-cylinder system being a hydraulically closed system contributes to that the piston-cylinder system is maintenance-free.

In a further advantageous embodiment of the first aspect of the invention, the width of the grooves is in the range of one to five millimeter. This contributes to a very good trapping of the particles.

In a further advantageous embodiment of the first aspect of the invention, the depth of the grooves is in the range of ten to thirty micrometer. This contributes to a very good trapping of the particles.

The invention is distinguished concerning a second aspect of the invention by a hydraulic compensation device. The hydraulic compensation device comprises the piston-cylinder system.

The invention is explained in the following with the help of schematic drawings.

These are as follows:
- figure 1: an injector,
- figure 2: a hydraulic compensation device,
- figure 3: a detailed view of the hydraulic compensation device according to figure 2.

Elements with the same design and function that appear in the different illustrations are identified by the same reference characters.

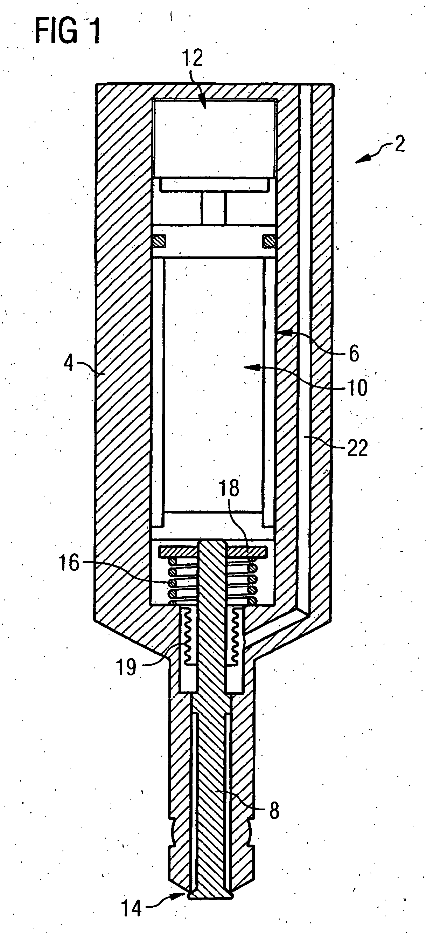

An injector 2 (figure 1) comprises an injector body 4 with an injector body recess 6. A needle body 8, an actor 10, and a hydraulic compensation device 12 are arranged in the injector body recess 6 of the injector body 4. The injector 2 may be used for dosing fluid into a combustion chamber or an inlet manifold of an internal combustion engine. The injector 2 is of an outward opening type. In an alternative embodiment the injector 2 may be of an inward opening type.

For example, the actor 10 is a piezoelectric actuator. If the piezoelectric actuator gets energized, it may change its axial length in an expansion-duration of some microseconds. By changing its length the actor 10 may force the needle body 8 out of a closing position of the needle body 8. In the closing position of the needle body 8, the needle body 8 prevents a fluid flow through an injection nozzle 14 in the injector body 4. Outside of the closing position of the needle body 8, there is a gap between the injector body 4 and the needle body 8 at an axial end of the injector 2 facing away from the compensation device 12 and the needle body 8 enables the fluid flow through the injection nozzle 14. Then, the fluid may flows through a fluid line 22 towards the injection nozzle 14. Bellows 19 prevent the fluid from flowing towards the actor 10.

A needle body spring 16 forces the needle body 8 via a needle plate 18 towards the actor 10. So, if the actor 10 gets de-energized the actor 10 shortens its length and the needle body spring 16 forces the needle body 8 in its closing position. Whether the needle body 8 is in its closing position or not depends on a force balance between the force on the needle body 8 because of the actor 10 and the force on the needle body 8 because of the needle body spring 16.

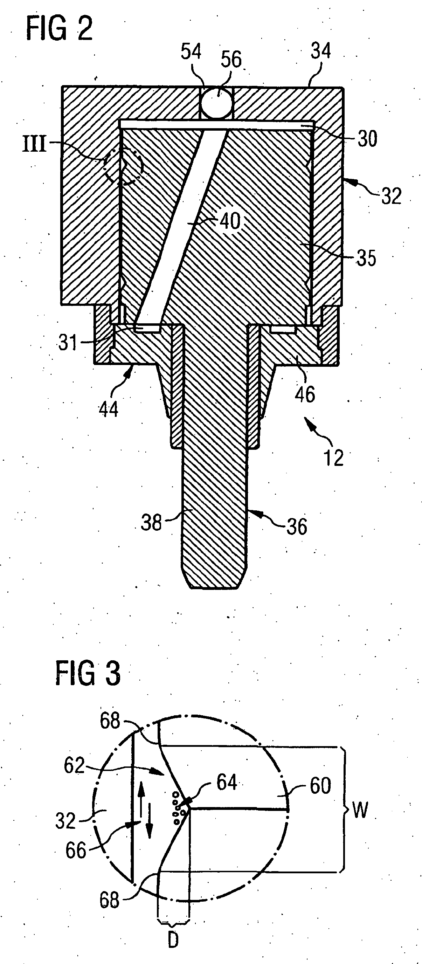

The compensation device 12 may comprise a piston-cylinder system (figure 2). The piston-cylinder system may comprise a cylinder 32 and a piston 36. The cylinder 32 has a cylinder bottom 34.

The compensation device 12 may comprise a first working volume 30 and a second working volume 31. The first working volume 30 is hydraulically coupled to the second working volume 31. Preferably, the first working volume 30 is hydraulically coupled to the second working volume 31 by a recess 40 of a piston head 35 of the piston 36. The first working volume 30 is axially bordered by the cylinder bottom 34 and by a first side of the piston 36. The second working volume 32 is axially bordered by a second side of the piston 36 and by a sealing membrane 46. The piston 36 has a piston rod 38 which extends through the sealing membrane 46. The sealing membrane 46 is a part of a sealing element 44 which is arranged for sealing up the hydraulic compensation device 12.

The compensation device 12 comprises a fluid inlet 54 in the cylinder bottom 34 for filling fluid into the compensation device 12. After filling the compensation device 12 with the fluid, the compensation device 12 may be sealed with a sealing body 56. In that way the compensation device 12 is a totally closed hydraulic system.

If the temperature of the injector 2 changes, the actor 10 and the injector body 4 change their axial length with the temperature. If the injector body 4 expands more or less than the actor 10 because of the temperature, without the compensation device 12 this may lead to a different position of the actor 10 relative to the injector body 4 and to a different position of the actor 10 relative to the needle body 8. This may leads to a loss of a contact between the actor 10 and the needle body 8, for example, in such a way that the actor 10 is not able to force the needle body 8 out of its closing position. So, without the compensation device 12 the different change of length of the injector body 4 and the actor 10 may contribute to a worsening of the fluid injection into the internal combustion engine.

The compensation device 12 may be arranged between the injector body 4 and the actor 10 to compensate the different thermal expansions of the injector body 4 and the actor 10. The compensation device 12 may further compensate a different thermal expansion of the needle body 8 relative to the actor 10 and/or the injector body 4.

If the temperature rises, the injector body 4 expands slowly but faster than the actor 10. So, the pressure from the piston 36 on the actor 10 and vice-versa decreases. This leads to a decreasing pressure in the first working volume 30. The decreasing pressure in the first working volume 30 leads to a flow of the fluid from the second working volume 31 to the first working volume 30. The fluid flow into the first working volume 30 leads to a movement of the piston 36 away from the cylinder bottom 34. So, the hydraulic compensation device 12 increases its axial length and the needle body 8 stays in contact with the actor 10.

A decreasing temperature of the injector 2 leads to an increasing pressure in the first working volume 30 and to a fluid flow from the first working volume 30 to the second working volume 31. Then, the hydraulic compensation device 12 decreases its axial length. So, the piston 36, especially the piston rod 38 never looses the contact to the actor 10. So, the actor 10 does not loose its contact to the needle body 8. This contributes to a precise dosing of fluid by the injector 2.

If the actor 10 gets energized or de-energized, the pressure on the piston 36 increases or, respectively, decreases so fast that the fluid can not flow fast enough through the recess 40 of the piston head 35. So, the whole compensation device 12 nearly acts like a stiff body and forms a back stop for the actor 10. So, the pressure is nearly completely transferred from the actor 10 to the needle body 8.

A groove 60 (figure 3) is formed in the piston head 35 of the piston 36. The groove 60 of the piston 36 extends around the piston head 35. Preferably, edges 68 of the groove 60 of the piston 36 comprise a spherical shape. If the edges 68 are in contact with the cylinder 32 while the piston 36 moves relative to the cylinder 32, the spherical shape of the edges 68 contributes to a low friction between the piston head 35 and the cylinder 32.

If the piston 36 moves in axial direction relative to the cylinder 32, oil flows in directions 66 from the first working volume 30 to the second working volume 31 or vice versa. Particles 64 in the fluid are trapped in a free particle agglomeration area 62 which is formed by the groove 60 of the piston 36. The particles 64 are trapped in the particle agglomeration area 62 because the fluid flow in the particle agglomeration area 62 is much lower than outside of the particle agglomeration area 62.

If the hydraulic compensation device 12 would not be the hydraulically closed system, the fluid may be filtered for filtering out the particles 64. With the hydraulically closed system this is not possible. So, the trapping of the particles 64 is very important in context with the hydraulic compensation device 12 being the hydraulically closed system.

Preferably, in order to achieve a very good trapping of the particles 64, the groove 60 of the piston 36 is arranged next to the axial ends of the piston head 35. In a normal operation of the hydraulic compensation device 12, the walls of the piston head 35 never are totally parallel to the walls of the cylinder 32. So, an axis of the piston 36 and an axis of the cylinder 32 include a small angle. Therefore, the friction between the piston 36 and the cylinder 32 is much bigger in the near of the axial ends of the piston head 35 than in the middle of the piston head 35. The friction causes an abrasion of the piston head 35 and of the cylinder 32 in the near of the axial ends of the piston head 35. The particles 64 mainly are produced by the abrasion of the cylinder 32 and the piston head 35. So, to arrange the groove 60 of the piston 36 next to the axial ends of the piston head 35 contributes to a trapping of most of the particles 64 produced by the abrasion of the piston 36 and the cylinder head 40.

Alternatively or additionally, the cylinder 32 comprises a groove of the cylinder 32. The groove of the cylinder 32 is formed in the wall of the cylinder 32 and extends around the piston head 35. Preferably, the groove of the cylinder 32 is arranged in an area next to the axial ends of the cylinder head 40. Further, edges 68 of the groove of the cylinder 32 preferably comprise a spherical shape.

If a clearance between the cylinder head 40 and the cylinder 32 is in the range of 10 to 30 micrometer, preferably, the depth D of the grooves is in the range of 10 to 30 micrometers and the width W is in the range of 1 to 3 millimeter.

The invention is not restricted on the explained embodiments. For example, the piston 36 may comprise a piston ring groove for taking in a piston ring. The piston ring may be arranged for sealing up the first working volume 30 at a first side of the piston ring against the second working volume 32 at the other side of the piston ring. Further, the grooves may comprise alternative shapes, for example a rectangular shape, a spherical shape, or any other shape which contributes to a very good trapping of the particles 64. Further, the piston head 35 and/or the cylinder 32 may comprise one or more than two grooves 60. Further, the grooves 60 may be arranged in the near of the middle of the cylinder head 40. Further, in a further or alternative embodiment of the injector 2, the compensation device 12 may be arranged between the actor 10 and the needle body 8. Then, the actor 10 acts on the needle body 8 via the compensation device 12. Further, in an alternative embodiment of the compensation device 12, a throttle may be arranged in the recess 34 of the piston 36. Further, in an alternative embodiment of the compensation device 30, there is a sealing arranged at the piston 36 in such a way that the second working volume 32 is sealed by the piston 36 and the sealing instead of having the sealing membrane 46.

## Claims

1. Hydraulically closed piston-cylinder system comprising a cylinder (32), a piston (36), which is arranged in the cylinder (32) movable in axial direction, **characterized by** a free particle agglomeration area (62) for trapping particles which
- is formed by a circular groove (60) of the piston (36) extending around a piston head (35) of the piston (36) and/or by a circular groove of the cylinder (32) extending around the piston head (35),
- is bordered by the cylinder (32) and walls of the circular groove (60) of the piston (36) and, respectively, by the piston (36) and walls of the circular groove of the cylinder (32).

2. Hydraulically closed piston-cylinder system in accordance with claim 1 with the piston (36) having a piston ring groove for taking in a piston ring.

3. Hydraulically closed piston-cylinder system in accordance with one of the preceding claims with the particle agglomeration area (62) being arranged next to an axial end of the piston head (35).

4. Hydraulically closed piston-cylinder system in accordance with one of the preceding claims with the circular grooves having spherical-shaped edges.

5. Hydraulically closed piston-cylinder system in accordance with one of the preceding claims with the width (W) of the circular grooves being in the range of one to five millimetres.

6. Hydraulically closed piston-cylinder system in accordance with one of the preceding claims with the depth (D) of the circular grooves being in the range of 10 to 30 micrometer.

7. Hydraulic compensation device (12) for an injector (2) comprising the hydraulically closed piston-cylinder system according to one of the preceding claims.

## Patentansprüche

1. Hydraulisch geschlossenes Kolben-Zylinder-System, umfassend einen Zylinder (32), einen Kolben (36), der in Axialrichtung beweglich in dem Zylinder (32) angeordnet ist, **gekennzeichnet durch** ein Gebiet (62) zur Agglomeration freier Teilchen zum Auffangen von Teilchen, welches
**durch** eine umlaufende Nut (60) des Kolbens (36) gebildet wird, die sich um einen Kolbenkopf (35) des Zylinders (36) herum erstreckt, und/oder **durch** eine umlaufende Nut des Zylinders (32), die sich um den Kolbenkopf (35) herum erstreckt,
und von dem Zylinder (32) und Wänden der umlaufenden Nut (60) des Kolbens (36) beziehungsweise **durch** den Kolben (36) und Wände der umlaufenden Nut des Zylinders (32) begrenzt wird.

2. Hydraulisch geschlossenes Kolben-Zylinder-System gemäß Anspruch 1, wobei der Kolben (36) eine Kolbenringnut zum Aufnehmens eines Kolbenrings aufweist.

3. Hydraulisch geschlossenes Kolben-Zylinder-System gemäß einem der vorhergehenden Ansprüche, wobei das Gebiet (62) zur Agglomeration von Teilchen in der Nähe des axialen Endes des Zylinderkopfes (35) angeordnet ist.

4. Hydraulisch geschlossenes Kolben-Zylinder-System gemäß einem der vorhergehenden Ansprüche, wobei die umlaufenden Nuten sphärisch geformte Kanten haben.

5. Hydraulisch geschlossenes Kolben-Zylinder-System gemäß einem der vorhergehenden Ansprüche, wobei die Breite (W) der umlaufenden Nuten in dem Bereich von einem bis fünf Millimetern liegt.

6. Hydraulisch geschlossenes Kolben-Zylinder-System gemäß einem der vorhergehenden Ansprüche, wobei die Tiefe (D) der umlaufenden Nuten in dem Bereich von 10 bis 30 Micrometern liegt.

7. Hydraulische Kompensationsvorrichtung (12) für einen Injektor (2), umfassend das hydraulisch geschlossene Kolben-Zylinder-System gemäß einem der vorhergehenden Ansprüche.

## Revendications

1. Système piston - cylindre fermé de manière hydraulique comprenant un cylindre (32), un piston (36), qui est agencé dans le cylindre (32) mobile dans une direction axiale, **caractérisé par** une zone d'agglomération de particules libres (62) destinée à piéger les particules, qui :
- est formée par une rainure circulaire (60) du piston (36) qui s'étend autour d'une tête de piston (35) du piston (36) et / ou par une rainure circulaire du cylindre (32) qui s'étend autour de la tête de piston (35) ;
- est encadrée par le cylindre (32) et les parois du support circulaire (60) du piston (36) et, respectivement, par le piston (36) et par les parois de la rainure circulaire du cylindre (32).

2. Système piston - cylindre fermé de manière hydraulique selon la revendication 1, dans lequel le piston (36) présente une gorge de segment de piston destinée à recevoir un segment de piston.

3. Système piston - cylindre fermé de manière hydraulique selon l'une quelconque des revendications précédentes, dans lequel la zone d'agglomération de particules (62) est agencée à côté d'une extrémité axiale de la tête de piston (35).

4. Système piston - cylindre fermé de manière hydraulique selon l'une quelconque des revendications précédentes, dans lequel les gorges circulaires présentent des bords dont la forme est sphérique.

5. Système piston - cylindre fermé de manière hydraulique selon l'une quelconque des revendications précédentes, dans lequel la largeur (W) des gorges circulaires se situe dans une plage comprise entre un millimètre et cinq millimètres.

6. Système piston - cylindre fermé de manière hydraulique selon l'une quelconque des revendications précédentes, dans lequel la profondeur (D) des gorgées circulaires se situe dans une plage comprise entre 10 micromètres et 30 micromètres.

7. Dispositif de compensation hydraulique (12) d'un injecteur (2), qui comprend le système piston - cylindre fermé de manière hydraulique selon l'une quelconque des revendications précédentes.
